# EUROPEAN PATENT SPECIFICATION

(11) **EP 0 498 182 B1**
(45) Date of publication and mention of the grant of the patent: **12.04.1995**
(21) Application number: 92100646.6
(22) Date of filing: 16.01.1992
(51) Int. Cl.: C10G 35/095, B01J 29/62, B01J 27/13

(54) **Catalyst for the production of aromatic hydrocarbons and process for producing aromatic hydrocarbons by the use thereof**
Katalysator zur Herstellung von aromatischen Kohlenwasserstoffen und Verfahren zur Herstellung aromatischer Kohlenwasserstoffe unter Verwendung dieses Katalysators
Catalyseur pour la production d'hydrocarbures aromatiques et procédé de production d'hydrocarbures aromatiques en employant ce catalyseur

(30) Priority: 05.02.1991 JP 35254/91
(43) Date of publication of application: 12.08.1992
(73) Proprietor: IDEMITSU KOSAN COMPANY LIMITED, Tokyo 100 (JP)
(72) Inventor: Katsuno, Hisashi, Sodegaura-shi, Chiba-ken (JP); Sugimoto, Michio, Sodegaura-shi, Chiba-ken (JP)
(74) Representative: Türk, Gille, Hrabal, Leifert

(56) References cited:
- EP-A- 0 201 856
- DE-A- 2 904 051
- FR-A- 2 548 204
- US-A- 4 795 549

## Description

### BACKGROUND OF THE INVENTION

### 1. Field of the Invention

The present invention relates to a catalyst for the production of aromatic hydrocarbons and a process for producing aromatic hydrocarbons by the use thereof and more particularly, to a catalyst suitable for the aromatization reaction comprising L-type zeolite with a platinum component and a halogen component simultaneously deposited thereon and a process for efficiently producing aromatic hydrocarbons from non-aromatic hydrocarbon such as paraffin series hydrocarbon by using said catalyst.

### 2. Description of the Related Art

Conventionally platinum·alumina series catalysts have been put to use as the catalyst for producing aromatic hydrocarbons by aromatizing non-aromatic hydrocarbon such as aliphatic hydrocarbon and in recent years there have been proposed the methods of using catalysts which contain L-type zeolite and platinum supported thereon, having an improved conversion efficiency (Japanese patent publication No. 57408/1983 and Japanese patent application LAID-OPEN Nos. 223614/1983 and 80333/1984).

However, all of platinum-supporting L-type zeolite catalysts used in these methods have not been found satisfactory because they have a low selectivity of aromatic hydrocarbons and a short catalyst lifetime. Meanwhile, a platinum-supporting L-type zeolite catalyst to which an alkaline earth metal (Ba, Sr, Ca) is introduced has been proposed as the improvement of said defects (Japanese patent application LAID-OPEN No. 133835/1983), but the follow-up study of the present inventors has resulted in a finding that this catalyst also is of no practical use as its selectivity of aromatic hydrocarbons and a catalyst lifetime are not sufficiently improved, along with a low catalysis stability.

There have been further proposed (1) a catalyst improved in catalytic activity and a catalyst lifetime by subjecting L-type zeolite with a metal or metals of Group VIII of the Periodic Table supported thereon to the oxychlorination treatment (Japanese patent application LAID-OPEN No. 168539/1985), (2) a catalyst whereon platinum is uniformly dispersed and supported, treated with a solution consisting of platinum solution and non-platinum metal salt (Japanese patent application LAID-OPEN No. 138539/1986), (3) a catalyst wherein platinum is supported on L-type zeolite treated with a halogen-containing compound (Japanese patent application LAID-OPEN No. 57653/1987), (4) a catalyst containing L-type zeolite with platinum supported thereon which is treated with a halogen-containing compound (Japanese patent application LAID-OPEN No. 91334/1988) and the like.

However, the catalysts mentioned in (1) are extremely poor in economical efficiency because of expensive equipment required for their production processes to carry out the oxychlorination treatment at high temperatures, while the catalysts of (2) do not show sufficient catalytic activity. Relative to catalyst of (3) and (4), though their catalytic activity is improved, they are still short of a sufficiently long term of a catalyst lifetime and require equipment of special type to deal with halogen components. Furthermore, it is desirable not to use these catalysts in points of the environmental protection as the halogen-containing compound to be used in their production processes is Flon gases (fluoroalkanes, chlorofluoroalkanes) which are controversial for their adverse influences on environment.

As mentioned above, the problems of the conventional catalysts lie in their production processes, catalytic activity, catalyst lifetime and the like, but a catalyst usable with satisfaction has not as yet been proposed.

Thus the present inventors have made intensive studies with a view to improving the defects of the conventional catalysts and developing a catalyst for the production of aromatic hydrocarbon which can be obtained by simple production processes without the need of special equipment, exhibiting an improved activity and having a longer term of catalyst lifetime. As the result, it has been found that above-mentioned object can be achieved by a catalyst comprising L-type zeolite and both a platinum component and a halogen component deposited simultaneously thereon. The present invention has been accomplished on the basis of this finding.

### SUMMARY OF THE INVENTION

An object of the present invention is to provide a catalyst for the production of aromatic hydrocarbons which can be obtained by treating both a platinum-containing compound and a halogen-containing compound (provided that alkali metal salts and alkaline earth metal salts are excluded) to be simultaneously deposited on L-type zeolite. Another object of the present invention is to provide a process for producing aromatic hydrocarbons by bringing in contact with said catalyst at least one hydrocarbon selected from the group consisting of paraffin series hydrocarbons, olefin series hydrocarbons, acetylene series hydrocarbons, cyclic paraffin series hydrocarbons and cyclic olefin series hydrocarbons.

Of the catalyst of the present invention, L-type zeolite is used as the carrier. As used herein, the L-type zeolite is represented by a compositional formula of 0.9∼1.3 M_{2/n}0·Al₂O₃ · 5.0∼7.0 SiO₂ · 0∼9H₂O wherein M represents an alkali metal or an alkaline earth metal and n represents the valency of M, and more specifically is L-type zeolite disclosed in Japanese patent application LAID-OPEN Nos. 133835/1983, pp. 9∼10 and 80333/1984, p. 5.

The catalyst of the present invention is characterized in that a platinum-containing compound and a halogen-containing compound are simultaneously treated and deposited on said L-zeolite. The platinum component and halogen component so simultaneously deposited provide the catalyst with an excellent catalytic activity and a long span of catalyst lifetime which has never seen before.

### BRIEF DESCRIPTION OF THE DRAWING

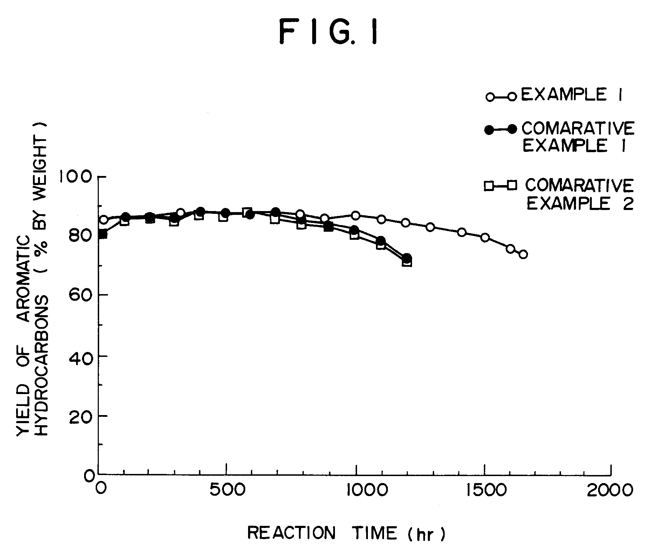

Fig. 1 is a graph showing changes in a yield of obtained aromatic hydrocarbons with the elapse of time, while the reaction was carried out in Example 1, Comparative Example 1 and Comparative Example 2.

### DESCRIPTION OF PREFERRED EMBODIMENTS

The platinum-containing compound to be used in the present invention is not limited in any way and may be from any platinum source. It may be ordinarily platinum salts and more specifically platinum tetrammine chloride, chloroplatinic acid, chloroplatinate, platinum tetrammine hydroxide, dinitrodiamino platinum and the like.

Further, the halogen-containing compounds may be any of various different compounds, but excluding alkali metal salts and alkaline earth metal salts which have at least one member selected from hydrogen chloride, ammonium chloride, hydrogen fluoride, ammonium fluoride, hydrogen iodide, hydrogen bromide and ammonium bromide. Either one of the above-mentioned compounds singly or a mixture of two or more of them can be used as the halogen-containing compound.

The catalyst of the present invention is produced by treating said platinum-containing compound and halogen-containing compound in the way they are deposited on the above-mentioned L-type zeolite at the same time. The method of depositing is not subject to any limitation, but any conventional one capable of simultaneous supporting of the platinum component and the halogen component can be used, including the ordinary pressure impregnation method, the vacuum impregnation method, the dipping method and the ion exchange method. The amount of supported compounds is not subject to any limitation at the time of depositing treatment, but that of supported platinum-containing compound is 0.1 to 5.0% by weight (calculated as platinum) on the basis of the total weight of the catalyst and particularly the range of 0.3 to 1.5% by weight is best suited. Further, the amount of supported halogen-containing compound is 0.1 to 5% by weight (calculated as halogen) on the basis of the total weight of the catalyst.

Depositing treatment conditions are not subject to any limitation and can be determined appropriately depending upon various different circumstances. Usually the depositing treatment is carried out by bringing L-type zeolite in contact with the platinum-containing compound and the halogen-containing compound simultaneously at room temperature to 90°C for 1 minute to 10 hours.

Natural or synthetic inorganic oxides, for example alumina, silica, aluminosilicate and the like may be added to the catalyst of the present invention as the binder if need be. These binders are added preferably in an amount of 5 to 90% by weight on the basis of the total weight of the catalyst.

As above-mentioned, while the catalyst of the present invention can be produced without requiring special equipment or processes, the so obtained catalyst is used as a so-called aromatization catalyst for producing a high yield of aromatic hydrocarbons from varieties of hydrocarbon under various different reaction conditions and aromatic hydrocarbons can be efficiently produced in accordance with the process of the present invention.

Under the process for producing aromatic hydrocarbons of the present invention, aromatic hydrocarbons are produced by bringing the hydrocarbon raw material selected from the group consisting of paraffin series hydrocarbons, olefin series hydrocarbons, acetylene series hydrocarbons, cyclic paraffin series hydrocarbons and cyclic olefin series hydrocarbons in contact with said catalyst of the present invention.

As said paraffin series hydrocarbons, those having 6 to 10 carbon atoms are preferred and more specifically including n-hexane, methylpentane, n-heptane, methylhexane, dimethylpentane, n-octane and the like.

Olefin series hydrocarbons include those having 6 to 10 carbon atoms and more specifically hexene, methylpentene, heptene, methylhexene, dimethylpentene, octene and the like. Acetylene series hydrocarbons include those having 6 to 10 carbon atoms and more specifically hexyne, heptyne, octyne and the like.

Cyclic paraffin series hydrocarbons include those having 6 to 10 carbon atoms and more specifically methylcyclopentane, cyclohexane, methylcyclohexane, dimethylcyclohexane and the like.

Further, cyclic olefin series hydrocarbons include those having 6 to 10 carbon atoms and more specifically methylcyclopentene, cyclohexene, methylcyclohexene, dimethylcyclohexene and the like.

The process of the present invention is allowed to proceed as said hydrocarbon raw material comes in contact with said catalyst, and the conditions thereof are not subject to any limitation. However, it is successfully carried out under the conditions of temperature of 350 to 600°C, preferably 400 to 500°C, pressure of 0 to 40 kg/cm²G, preferably 0 to 10 kg/cm²G and liquid hourly space velocity (LHSV) of 0.1 to 20 hr⁻¹, preferably 1 to 10 hr⁻¹. Further, the feed ratio of hydrogen gas/hydrocarbon raw material in the range of 0 to 50 mol/mol enables the process of the present invention to be more successful.

As described above, the catalyst of the present invention is a very useful catalyst for the production of aromatic hydrocarbons because it can be prepared by using the commonplace simple processes without the need of special equipment and is capable of producing aromatic hydrocarbons from varieties of hydrocarbons during a long-term stable operation with a high yield and high activity.

Further, the process for producing aromatic hydrocarbons of the present invention enables the production of high yields of aromatic hydrocarbons, while the catalyst thereof can remain activated for a long period of time, and therefore a long-term aromatization operation can be continued with the yield of aromatic hydrocarbons remaining at a high level according to the present invention.

Also, relative to the catalyst of the present invention, the span of its catalyst lifetime is significantly improved, there is less incidence of its reactivation and finished products are manufactured at a low cost and a high productivity. Thus the catalyst of the present invention is very useful industrially, finding a wide range of application in the fields of petrochemistry for the production of aromatic hydrocarbons and petroleum refining industry in obtaining of high octane number fuel.

The present invention will be described in greater detail with reference to the following examples.

### Example 1

### (1) Preparation of Catalyst

To 100 parts by weight of L-type zeolite (a "TSZ-500KOA" brand supplied by Toso Co., Ltd.), 20 parts by weight of a silica binder (a "Snowtex" brand supplied by Nissan Kagaku Co., Ltd.) were added and the mixture was mixed, kneaded and molded. Then the so obtained molded mixture was air-calcined at 500°C for 2 hours and a silica binder-molded L-type zeolite was obtained.

Next. 1.39 g of a 3.6% by weight solution of hydrogen chloride, 0.097 g of ammonium fluoride, 0.171 g of platinum tetraammine chloride and 3.6 g of ion exchange water were mixed to obtain an impregnation liquid.

The so obtained impregnation liquid is slowly dropped in 10 g of said silica binder-molded L-type zeolite with stirring, subjecting platinum and halogen to the depositing treatment simultaneously. After it was dried at room temperature overnight, zeolite so processed was treated at 300°C for 30 minutes in the air and a catalyst was obtained.

### (2) Production of Aromatic Hydrocarbons

0.5 g of the catalyst prepared in Example (1) was placed in a quartz reactor and treated at 540°C for 24 hours in a stream of hydrogen.

Thereafter, using light naphtha having the composition of n-hexane/isohexane/methylcyclopentane=49/43/8 by weight and hydrogen respectively as a feed, the aromatization reaction was carried out under the conditions of weight hourly space velocity of 2 hr⁻¹, hydrogen/light naphtha ratio of 5 mol/1 mol, pressure of 5 kg/cm²G and temperature of 500°C. Fig. 1 shows the changes that occurred in the yield of aromatic hydrocarbons thus obtained with the elapse of time while the reaction was carried out.

### Comparative Example 1

### (1) Preparation of Catalyst

20 g of silica binder-molded L-type zeolite obtained in Example 1 (1) was placed in a quartz reactor and maintained at 200°C for 30 minutes while passing nitrogen gas theretrough, then the gas was replaced by monochlorotrifluoromethane gas and the temperature was elevated to 500°C. After the temperature was elevated to 500°C, said zeolite was treated for 2 hours, the gas was replaced by nitrogen gas again, the temperature was lowered and a halogen-treated L-type zeolite was obtained.

An impregnation liquid comprising 0.171 g of platinum tetrammine chloride and 4.0 g of ion exchange water was slowly dropped in 10 g of said halogen-treated L-type zeolite with stirring to carry out the supporting treatment. After the depositing treatment, said zeolite was dried in a desiccator at 80°C for 3 hours and a catalyst was obtained.

### (2) Production of Aromatic Hydrocarbons

The aromatization reaction was carried out in the same matter as in Example 1 (2) except that the catalyst of Example 1 (2) was replaced by the catalyst obtained in Comparative Example 1 (1). Fig. 1 shows the changes in the yield of aromatic hydrocarbons thus obtained with the passage of time.

### Comparative Example 2

### (1) Preparation of Catalyst

An impregnation liquid comprising 0.171 g of platinum tetrammine chloride and 4.8 g of ion exchange water was slowly dropped in 10 g of silica binder-molded L-type zeolite obtained in Example 1 (1) with stirring, said zeolite was dried at room temprature for 2 hours, then treated at 80°C for 3 hours in the air and a catalyst was obtained.

The catalyst thus obtained was placed in a quartz reactor and maintained at 200 °C for 1 hour in a stream of nitrogen gas, followed by elevating the temperature to 480°C. At 480°C, the gas was replaced by a gas mixture of Flon 112 (1,1,2,2-tetrachloro-1,2-difluoroethane)/nitrogen=0.1/99.9% by volume, and the catalyst was treated for 10 hours. Thereafter, the gas was replaced by nitrogen gas again, the temperature was lowered and a catalyst was prepared.

### (2) Production of Aromatic Hydrocarbons

The aromatization reaction was carried out in the same manner as in Example 1 (2) except that the catalyst used in Example 1 (2) was replaced by the catalyst obtained in Comparative 2 (1). Fig. 1 shows the changes of the yield of aromatic hydrocarbons thus obtained with the elapse of time.

### Example 2

### (1) Preparation of Catalyst

A catalyst was obtained in the same manner as in Example 1 (1).

### (2) Production of Aromatic Hydrocarbons

0.05 g of the catalyst obtained in Example 2 (1) was collected and placed in a pulse reactor. Then, it was heated to 500°C for 1 hour and maintained at 500°C for another 1 hour in a stream of hydrogen gas. The reaction temperature was adjusted to 470°C and the aromatization reaction was carried out by subjecting n-hexane to a 3 microliter pulse in a stream of hydrogen gas (2.2 liters/hr). As the result, benzene was obtained in a 55.7% yield.

### Comparative Example 3

### (1) Preparation of Catalyst

0.0735 g of potassium chloride, 0.107 g of potassium fluoride, 0.120 g of platinum tetrammmine chloride and 3.50 g of ion exchange water were mixed to prepare an impregnation liquid.

The impregnation liquid thus prepared was slowly dropped in 7 g of silica binder-molded L-type zeolite obtained in Example 1 (1) with stirring. Then, after it was dried at room temperature overnight, said zeolite was treated at 300°C for 30 minutes to prepare a catalyst.

### (2) Production of Aromatic Hydrocarbons

The aromatization reaction was carried out in the same manner as in Example 2 (2) except that the catalyst of Example 2 (2) was replaced by the catalyst obtained in Comparative Example 3 (1). As the result, benzene was obtained in a 10.8% yield.

### Comparative Example 4

### (1) Preparation of Catalyst

1.39 g of a 3.6% by weight of hydrochloric acid solution, 0.097 g of ammonium fluoride and 3.6 g of ion exchange water were mixed to prepare an impregnation liquid.

The impregnation liquid was slowly dropped in 10 g of silica binder-molded L-type zeolite obtained in Example 1 (1) with stirring and halogen was supported thereon. Said zeolite was dried at room temperature overnight and then treated at 300°C for 30 minutes in the air to obtain a catalyst with halogen supported thereon.

An impregnation liquid comprising 0.137 g of platinum tetrammine chloride and 3.68 g of ion exchange water was slowly dropped with stirring in 8 g of the catalyst with halogen supported thereon and the catalyst was dried at room temperature overnight to prepare a catalyst.

### (2) Production of Aromatic Hydrocarbons

The aromatization reaction was carried out in the same manner as in Example 2 (2) except that the catalyst of Example 2 (2) was replaced by the catalyst obtained in Comparative Example 4 (1). As the result, benzene was obtained in a 47.1% yield.

### Comparative Example 5

### (1) Preparation of Catalyst

The impregnation liquid comprising 0.171 g of platinum tetrammine chloride and 4.8 g of ion exchange water was slowly dropped in 10 g of silica binder-molded L-type zeolite, obtained in Example 1 (1), with stirring, said zeolite was dried at room temperature for 2 hours, then treated at 120°C for 3 hours in the air to obtain a catalyst with platinum supported thereon.

The impregnation liquid comprising 0.514 g of a 6.8% by weight of hydrogen chloride solution, 0.0682 g of ammonium fluoride and 3.34 g of ion exchange water was slowly dropped with stirring in 7 g of the catalyst with platinum supported obtained thereon, as above, and the catalyst was dried at room temperature overnight and then treated at 300°C for 30 minutes to prepare a catalyst.

### (2) Production of Aromatic Hydrocarbons

The aromatization reaction was carried out in the same manner as in Example 2 (2) except that the catalyst of Example 2 (2) was replaced by the catalyst obtained in Comparative Example 5 (1). As the result, benzene was obtained in a 39.2% yield.

### Comparative Example 6

### (1) Preparation of Catalyst

The impregnation liquid comprising 0.171 g of platinum tetrammine chloride and 4.8 g of ion exchange water was slowly dropped in 10 g of silica binder-molded L-type zeolite obtained in Example 1 (1) with stirring, said zeolite was dried at room temperature overnight, and then treated at 300°C for 30 minutes to prepare a catalyst.

### (2) Production of Aromatic Hydrocarbons

The aromatization reaction was carried out in the same manner as in Example 2 (2) except that the catalyst of Example 2 (2) was replaced by the catalyst obtained in Comparative Example 6 (1). As the result, benzene was obtained in a 32.1% yield.

### Example 3

### (1) Preparation of Catalyst

To 100 parts by weight of L-type zeolite (a "TSZ-500KOA"® brand supplied by Toso Co., Ltd.), 20 parts by weight of a silica binder (a "Snowtex"® brand supplied by Nissan Kagaku Co., Ltd.) were added with mixing kneaded and molded. Then the molded mixture thus obtained was air-calcined at 500°C for 2 hours and a silica binder-molded L-type zeolite was obtained.

Next, 0.097 g of ammonium fluoride, 0.171 g of platinum tetrammine chloride and 4.8 g of ion exchange water were mixed to obtain an impregnation liquid.

The impregnation liquid thus obtained was slowly dropped in 10 g of said silica binder-molded L-type zeolite with stirring, subjecting platinum and halogen to the depositing treatment simultaneously. After it was dried at room temperature overnight, zeolite so processed was treated at 300°C for 3 hours in the air and a catalyst was obtained.

### (2) Production of Aromatic Hydrocarbons

0.5 g of the catalyst prepared in Example 3 (1) was placed in a quartz reactor and treated at 540°C for 24 hours in a stream of hydrogen.

Thereafter, using light naphtha having the composition of n-hexane/isohexane/methylcyclopentane=49/43/8 by weight and hydrogen respectively as a feed, the aromatization reaction was carried out under the conditions of weight hourly space velocity of 16 hr⁻¹, hydrogen/light naphtha ratio of 5 mol/1 mol, pressure of 5 kg/cm²G and temperature of 517°C and maintenance for 20 hours. As the result, aromatic hydrocarbons were obtained in a 52.9% yield.

### Comparative Example 7

### (1) Preparation of Catalyst

The impregnation liquid comprising 0.097 g of ammonium fluoride and 4.8 g of ion exchange water was slowly dropped in 10 g of silica binder-molded L-type zeolite obtained in Example 3 (1) with stirring, said zeolite was dried at room temperature overnight, then treated at 300°C for 3 hours in the air to obtain a catalyst with halogen supported thereon.

The impregnation liquid comprising 0.171 g of platinum tetrammine chloride and 4.8 g of ion exchange water was slowly dropped with stirring in 10 g of the catalyst with halogen supported thereon, as obtained above, and the catalyst was dried at room temperature overnight to prepare a catalyst.

### (2) Production of Aromatic Hydrocarbons

The aromatization reaction was carried out in the same manner as in Example 3 (2) except that the catalyst of Example 3 (2) was replaced by the catalyst obtained in Comparative Example 7 (1). As the result, aromatic hydrocarbons were obtained in a 48.1% yield.

### Comparative Example 8

### (1) Preparation of Catalyst

The impregnation liquid comprising 0.171 g of platinum tetrammine chloride and 4.8 g of ion exchange water was slowly dropped in 10 g of silica binder-molded L-type zeolite obtained in Example 3 (1) with stirring, said zeolite was dried at room temperature for 2 hours, then treated at 120°C for 3 hours in the air to obtain a catalyst with platinum supported thereon.

The impregnation liquid comprising 0.097 g of ammonium fluoride and 4.8 g of ion exchange water was slowly dropped with stirring in 10 g of the catalyst with platinum supported thereon, as obtained above, and the catalyst was dried at room temperature overnight and then treated at 300°C for 3 hours to prepare a catalyst.

### (2) Production of Aromatic Hydrocarbons

The aromatization reaction was carried out in the same manner as in Example 3 (2) except that the catalyst of Example 3 (2) was replaced by the catalyst obtained in Comparative Example 8 (1). As the result, aromatic hydrocarbons were obtained in a 40.0% yield.

### Example 4

### (1) Preparation of Catalyst

The impregnation liquid comprising 0.097 g of ammonium fluoride, 0.075 g of ammonium chloride, 0.171 g of platinum tetrammine chloride and 4.8 g of ion exchange water was slowly dropped in 10 g of silica binder-molded L-type zeolite, obtained in Example 3 (1), with stirring, said zeolite was dried at room temperature overnight, then treated at 300°C for 3 hours in the air to prepare a catalyst.

### (2) Production of Aromatic Hydrocarbons

The aromatization reaction was carried out in the same manner as in Example 3 (2) except that the catalyst of Example 3 (2) was replaced by the catalyst obtained in Comparative Example 4 (1). As the result, aromatic hydrocarbons were obtained in a 63.8% yield.

### Comparative Example 9

### (1) Preparation of Catalyst

The impregnation liquid comprising 0.097 g of ammonium fluoride, 0.075 g of ammonium chloride, and 4.8 g of ion exchange water was slowly dropped in 10 g of silica binder-molded L-type zeolite obtained in Example 3 (1) with stirring, said zeolite was dried at room temperature overnight, then treated at 300°C for 3 hours in the air to obtain a catalyst with halogen supported thereon.

The impregnation liquid comprising 0.171 g of platinum tetrammine chloride and 4.8 g of ion exchange water was slowly dropped with stirring in 10 g of the catalyst with halogen supported thereon, as obtained above, and the catalyst was dried at room temperature overnight to prepare a catalyst.

### (2) Production of Aromatic Hydrocarbons

The aromatization reaction was carried out in the same manner as in Example 3 (2) except that the catalyst of Example 3 (2) was replaced by the catalyst obtained in Comparative Example 9 (1). As the result, aromatic hydrocarbons were obtained in a 55.0% yield.

### Comparative Example 10

### (1) Preparation of Catalyst

The impregnation liquid comprising 0.171 g of platinum tetrammine chloride and 4.8 g of ion exchange water was slowly dropped in 10 g of silica binder-molded L-type zeolite obtained in Example 3 (1) with stirring, said zeolite was dried at room temperature for 2 hours, then treated at 120°C for 3 hours in the air to obtain a catalyst with platinum supported thereon.

The impregnation liquid comprising 0.097 g of ammonium fluoride, 0.075 g of ammonium chloride and 4.8 g of ion exchange water was slowly dropped in 10 g of the catalyst with platinum supported thereon, as obtained above, and the catalyst was dried at room temperature overnight and then treated at 300 °C for 3 hours to prepare a catalyst.

### (2) Production of Aromatic Hydrocarbons

The aromatization reaction was carried out in the same manner as in Example 3 (2) except that the catalyst of Example 3 (2) was replaced by the catalyst obtained in Comparative Example 10 (1). As the result, aromatic hydrocarbons were obtained in a 50.5% yield.

### Example 5

### (1) Preparation of Catalyst

The impregnation liquid comprising 0.097 g of ammonium fluoride, 0.061 g of ammonium bromide, 0.171 g of platinum tetrammine chloride and 4.8 g of ion exchange water was slowly dropped in 10 g of silica binder-molded L-type zeolite obtained in Example 3 (1) with stirring, said zeolite was dried at room temperature overnight, then treated at 300°C for 3 hours in the air to prepare a catalyst.

### (2) Production of Aromatic Hydrocarbons

The aromatization reaction was carried out in the same manner as in Example 3 (2) except that the catalyst of Example 3 (2) was replaced by the catalyst obtained in above Example 5 (1). As the result, aromatic hydrocarbons were obtained in a 60.9% yield.

### Comparative Example 11

### (1) Preparation of Catalyst

The impregnation liquid comprising 0.097 g of ammonium fluoride, 0.061 g of ammonium bromide, and 4.8 g of ion exchange water was slowly dropped in 10 g of silica binder-molded L-type zeolite obtained in said Example 3 (1) with stirring, said zeolite was dried at room temperature overnight, then treated at 300°C for 3 hours in the air to obtain a catalyst with halogen supported thereon.

The impregnation liquid comprising 0.171 g of platinum tetrammine chloride and 4.8 g of ion exchange water was slowly dropped with stirring in 10 g of a catalyst with halogen supported thereon, as obtained above, and the catalyst was dried at room temperature overnight to prepare a catalyst.

### (2) Production of Aromatic Hydrocarbons

The aromatization reaction was carried out in the same manner as in Example 3 (2) except that the catalyst of Example 3 (2) was replaced by the catalyst obtained in Comparative Example 11 (1). As the result, aromatic hydrocarbons were obtained in a 56.3% yield.

### Comparative Example 12

### (1) Preparation of Catalyst

The impregnation liquid comprising 0.171 g of platinum tetrammine chloride and 4.8 g of ion exchange water was slowly dropped in 10 g of silica binder-molded L-type zeolite obtained in Example 3 (1) with stirring, said zeolite was dried at room temperature for 2 hours, then treated at 120°C for 3 hours in the air to obtain a catalyst with platinum supported thereon.

The impregnation liquid comprising 0.097 g of ammonium fluoride, 0.061 g of ammonium bromide and 4.8 g of ion exchange water was slowly dropped with stirring in 10 g of the catalyst with platinum supported thereon, as obtained above, and the catalyst was dried at room temperature overnight and then treated at 300°C for 3 hours to prepare a catalyst.

### (2) Production of Aromatic Hydrocarbons

The aromatization reaction was carried out in the same manner as in Example 3 (2) except that the catalyst of Example 3 (2) was replaced by the catalyst obtained in Comparative Example 12 (1). As the result, aromatic hydrocarbons were obtained in a 48.2% yield.

### Comparative Example 13

### (1) Preparation of Catalyst

The impregnation liquid comprising 0.171 g of platinum tetrammine chloride and 4.8 g of ion exchange water was slowly dropped in 10 g of silica binder-molded L-type zeolite, obtained in Example 3 (1), with stirring, said zeolite was dried at room temperature for 2 hours, then treated at 120°C for 3 hours in the air to obtain a catalyst with platinum supported thereon.

### (2) Production of Aromatic Hydrocarbons

The aromatization reaction was carried out in the same manner as in Example 3 (2) except that the catalyst of Example 3 (2) was replaced by the catalyst obtained in Comparative Example 13 (1). As the result, aromatic hydrocarbons were obtained in a 35.2% yield.

## Claims

1. A catalyst for the production of aromatic hydrocarbons, which comprises a L-type zeolite with both platinum-containing compounds in an amount of 0.1 to 5.0 % by weight (calculated as platinum) based on the total weight of the catalyst and halogen-containing compounds other than alkali metal salts and alkaline earth metal salts which have each at least one member selected from hydrogen chloride, ammonium chloride, hydrogen fluoride, ammonium fluoride, hydrogen iodide, ammonium iodide, hydrogen bromide and ammonium bromide in an amount of 0.1 to 5.0 % by weight (calculated as halogen) based on the total weight of the catalyst, both the compounds being simultaneously deposited thereon.

2. The catalyst according to Claim 1, wherein said platinum-containing compounds are each at least one member selected from platinum tetramine chloride, chloroplatinic acid, chloroplatinate, platinum tetramine hydroxide and dinitrodiamino platinum.

3. The catalyst according to Claim 1, further comprising at least one binder in an amount of 5 to 90 % by weight based on the total weight of the catalyst in addition to said zeolite with both platinum-containing compounds and halogen-containing compounds.

4. The catalyst according to Claim 3, wherein said binder is selected from alumina, silica and aluminosilicate.

5. A process for producing aromatic hydrocarbons which comprises bringing at least one starting hydrocarbon selected from the group consisting of hydrocarbons of paraffin series, olefin series, acetylene series, cyclic paraffin series and cyclic olefin series into contact with a catalyst comprising L-type zeolite with both platinum-containing compounds in an amount of 0.1 to 5.0 % by weight (calculated as platinum) based on the total weight of the catalyst and halogen-containing compounds other than alkali metal salts and alkaline earth metal salts which are each at least one member selected from hydrogen chloride, ammonium chloride, hydrogen fluoride, ammonium fluoride, hydrogen iodide, ammonium iodide, hydrogen bromide and ammonium bromide in an amount of 0.1 to 5.0 % by weight (calculated as halogen) based on the total weight of the catalyst, both the compounds being simultaneously deposited thereon.

6. The process according to Claim 5, wherein said platinum-containing compounds are each at least one member selected from platinum tetrammine chloride, chloroplatinic acid, chloroplatinate, platinum tetrammine hydroxide and dinitrodiamino platinum.

7. The process according to Claim 5, further comprising at least one binder in an amount of 5 to 90 % by weight based on the total weight of the catalyst in addition to said zeolite with both platinum-containing compounds and halogen-containing compounds.

8. The process according to Claim 7, wherein said binder is selected from alumina, silica and aluminosilicate.

9. The process according to Claim 5, wherein said starting hydrocarbon has 6 to 10 carbon atoms.

10. The process according to Claim 5, wherein said starting hydrocarbon is brought into contact with said catalyst at a temperature of 350 to 600 °C, a pressure of 0 to 40 kg/cm², a liquid hourly space velocity of 0.1 to 20 hr⁻¹ and a molar feed ratio of hydrogen to said hydrocarbon of 0 to 50.

## Patentansprüche

1. Katalysator zur Herstellung von aromatischen Kohlenwasserstoffen, der einen Zeolith-L umfaßt mit sowohl platinhaltigen Verbindungen in einer Menge von 0,1 bis 5,0 Gewichts-% (berechnet als Platin), bezogen auf das Gesamtgewicht des Katalysators, als auch halogenhaltigen Verbindungen, die keine Alkalimetallsalze und Erdalkalimetallsalze sind, und die wenigstens eine Komponente aufweisen, ausgewählt unter Chlorwasserstoff, Ammoniumchlorid, Fluorwasserstoff, Ammoniumfluorid, Iodwasserstoff, Ammoniumiodid, Bromwasserstoff und Ammoniumbromid in einer Menge von 0,1 bis 5,0 Gewichts-% (berechnet als Halogen), bezogen auf das Gesamtgewicht des Katalysators, wobei die Verbindungen gleichzeitig darauf abgeschieden sind.

2. Katalysator nach Anspruch 1, worin die platinhaltigen Verbindungen jeweils ein Glied sind, ausgewählt unter Platintetramminchlorid, Chlorplatinsäure, Chlorplatinat, Platintetramminhydroxid und Dinitrodiaminoplatin.

3. Katalysator nach Anspruch 1, der weiterhin wenigstens ein Bindemittel umfaßt in einer Menge von 5 bis 90 Gewichts-%, bezogen auf das Gesamtgewicht des Katalysators, zusätzlich zu dem Zeolith mit sowohl platinhaltigen Verbindungen als auch halogenhaltigen Verbindungen.

4. Katalysator nach Anspruch 3, worin das Bindemittel ausgewählt ist unter Aluminiumoxid, Siliciumdioxid und Aluminiumsilikat.

5. Verfahren zur Herstellung von aromatischen Kohlenwasserstoffen, dadurch gekennzeichnet, daß wenigstens ein Ausgangskohlenwasserstoff, ausgewählt aus der Gruppe, die aus Kohlenwasserstoffen der Paraffinreihe, der Olefinreihe, der Acetylenreihe, der Reihe der cyclischen Paraffine und der Reihe der cyclischen Olefine besteht, mit einem Katalysator in Kontakt gebracht wird, der einen Zeolith-L umfaßt mit sowohl platinhaltigen Verbindungen in einer Menge von 0,1 bis 5,0 Gewichts-% (berechnet als Platin), bezogen auf das Gesamtgewicht des Katalysators, als auch halogenhaltigen Verbindungen, die keine Alkalimetallsalze und Erdalkalimetallsalze sind, und die wenigstens eine Komponente aufweisen, ausgewählt unter Chlorwasserstoff, Ammoniumchlorid, Fluorwasserstoff, Ammoniumfluorid, Iodwasserstoff, Ammoniumiodid, Bromwasserstoff und Ammoniumbromid in einer Menge von 0,1 bis 5,0 Gewichts-% (berechnet als Halogen), bezogen auf das Gesamtgewicht des Katalysators, wobei die Verbindungen gleichzeitig darauf abgeschieden sind.

6. Verfahren nach Anspruch 5, worin die platinhaltigen Verbindungen jeweils ein Glied sind, ausgewählt unter Platintetramminchlorid, Chlorplatinsäure, Chlorplatinat, Platintetramminhydroxid und Dinitrodiaminoplatin.

7. Verfahren nach Anspruch 5, worin weiterhin wenigstens ein Bindemittel enthalten ist in einer Menge von 5 bis 90 Gewichts-%, bezogen auf das Gesamtgewicht des Katalysators, zusätzlich zu dem Zeolith mit sowohl platinhaltigen Verbindungen als auch halogenhaltigen Verbindungen.

8. Verfahren nach Anspruch 7, worin das Bindemittel ausgewählt ist unter Aluminiumoxid, Siliciumdioxid und Aluminiumsilikat.

9. Verfahren nach Anspruch 5, worin der Ausgangskohlenwasserstoff 6 bis 10 Kohlenstoffatome hat.

10. Verfahren nach Anspruch 5, worin der Ausgangskohlenwasserstoff in Kontakt gebracht wird mit dem Katalysator bei einer Temperatur von 350 bis 600 °C, einem Druck von 0 bis 40 kg/cm², einem Durchsatz von 0,1 bis 20 Std⁻¹ und einem Molarverhältnis der Einspeisung von Wasserstoff zu dem Kohlenwasserstoff von 0 bis 50.

## Revendications

1. Un catalyseur pour la préparation d'hydrocarbures aromatiques, qui comporte une zéolite de type L avec à la fois des composés renfermant du platine en une quantité de 0,1 à 5,0% en poids (calculée sous forme de platine) en se basant sur le poids total du catalyseur, et des composés renfermant de l'halogène autres que des sels de métaux alcalins et des sels de métaux alcalino-terreux qui ont chacun au moins un élément choisi parmi le chlorure d'hydrogène, le chlorure d'ammonium, le fluorure d'hydrogène, le fluorure d'ammonium, l'iodure d'hydrogène, l'iodure d'ammonium, le bromure d'hydrogène et le bromure d'ammonium en une quantité de 0,1 à 5,0% en poids (calculée sous forme d'halogène) en se basant sur le poids total du catalyseur, les deux composés étant simultanément déposés sur la zéolite.

2. Le catalyseur selon la revendication 1, dans lequel lesdits composés renfermant du platine sont chacun au moins un élément choisi parmi le chlorure de platine-tétrammine, l'acide chloroplatinique, le chloroplatinate, l'hydroxyde de platine-tétrammine et le dinitrodiaminoplatine.

3. Le catalyseur de la revendication 1, comportant en outre au moins un agent liant en une quantité de 5 à 90% en poids en se basant sur le poids total du catalyseur en supplément de ladite zéolite avec à la fois des composés renfermant du platine et des composés renfermant de l'halogène.

4. Le catalyseur selon la revendication 3, dans lequel ledit agent liant est choisi parmi l'alumine, la silice et les aluminosilicates.

5. Un procédé pour préparer des hydrocarbures aromatiques, procédé selon lequel on met au moins un hydrocarbure de départ choisi dans le groupe constitué par les hydrocarbures de type parafffinique, de type oléfinique, de type acétylénique, de type paraffinique cyclique et de type oléfinique cyclique en contact avec un catalyseur comportant une zéolite de type L avec à la fois des composés renfermant du platine en une quantité de 0,1 à 5,0% en poids (calculée sous forme de platine) en se basant sur le poids total du catalyseur, et des composés renfermant de l'halogène autres que des sels de métaux alcalins et des sels de métaux alcalino-terreux qui ont chacun au moins un élément choisi parmi le chlorure d'hydrogène, le chlorure d'ammonium, le fluorure d'hydrogène, le fluorure d'ammonium, l'iodure d'hydrogène, l'iodure d'ammonium, le bromure d'hydrogène et le bromure d'ammonium en une quantité de 0,1 à 5,0% en poids (calculée sous forme d'halogène) en se basant sur le poids total du catalyseur, les deux composés étant simultanément déposés sur la zéolite.

6. Le procédé selon la revendication 5, dans lequel lesdits composés renfermant du platine sont chacun au moins un élément choisi parmi le chlorure de platine-tétrammine, l'acide chloroplatinique, le chloroplatinate, l'hydroxyde de platine-tétrammine et le dinitrodiaminoplatine.

7. Le procédé selon la revendication 5, comportant en outre au moins un agent liant en une quantité de 5 à 90% en poids en se basant sur le poids total du catalyseur en supplément de ladite zéolite avec à la fois des composés renfermant du platine et des composés renfermant de l'halogène.

8. Le procédé selon la revendication 7, dans lequel ledit agent liant est choisi parmi l'alumine, la silice et les aluminosilicates.

9. Le procédé selon la revendication 5, dans lequel ledit hydrocarbure de départ présente de 6 à 10 atomes de carbone.

10. Le procédé selon la revendication 5, dans lequel ledit hydrocarbure de départ est mis en contact avec ledit catalyseur à une température de 350 à 600°C, sous une pression de 0 à 40 kg/cm², à une vitesse spatiale horaire liquide de 0,1 à 20 h⁻¹ et avec un rapport molaire d'alimentation de l'hydrogène audit hydrocarbure de 0 à 50.
